# EUROPÄISCHE PATENTSCHRIFT

(11) **EP 1 296 857 B1**
(45) Veröffentlichungstag und Bekanntmachung des Hinweises auf die Patenterteilung: **14.09.2005**
(21) Anmeldenummer: 01955229.8
(22) Anmeldetag: 05.07.2001
(51) Int. Cl.: B60R 21/22

(54) **GASSACK FÜR EINE INSASSEN-SCHUTZEINRICHTUNG**
GAS BAG FOR A PASSENGER PROTECTION DEVICE
SAC DE GAZ DESTINE A UN DISPOSITIF DE PROTECTION DES OCCUPANTS

(30) Priorität: 05.07.2000 DE 10033937
(43) Veröffentlichungstag der Anmeldung: 02.04.2003
(73) Patentinhaber: Takata-Petri AG, 63743 Aschaffenburg (DE)
(72) Erfinder: ADOMEIT, Heinz-Dieter, 10623 Berlin (DE)
(74) Vertreter: Baumgärtel, Gunnar
(86) Internationale Anmeldenummer: PCT/DE2001/002532
(87) Internationale Veröffentlichungsnummer: WO 2002/002376

(56) Entgegenhaltungen:
- WO-A-97/34783
- DE-A- 4 334 606
- DE-A- 19 757 410
- DE-A- 19 930 157
- US-A- 3 588 142
- US-A- 5 480 184
- US-A- 5 934 701
- US-A- 6 042 147
- US-A- 6 059 311
- PATENT ABSTRACTS OF JAPAN vol. 1998, no. 11, 30. September 1998 (1998-09-30) -& JP 10 166981 A (IKEDA BUSSAN CO LTD), 23. Juni 1998 (1998-06-23)

## Beschreibung

Die Erfindung betrifft einen Gassack für eine Insassen-Schutzeinrichtung in Kraftfahrzeugen nach dem Oberbegriff des Anspruchs 1.

Ein solcher Gassack ist mittels eines Gasgenerators aufblasbar und bildet im aufgeblasenen Zustand ein mit Gas gefülltes Kissen, das einem Insassen in einem Crash-Fall Schutz vor Verletzungen bietet. Hierzu wird der Gassack bzw. ein den Gassack enthaltendes Airbag-Modul in einem Kraftfahrzeug derart angeordnet, dass die äußere Hülle des Gassackes im aufgeblasenen Zustand des Gassackes eine dem Insassen zugewandte Hüllenfläche aufweist, auf die der Insasse in einem Crash-Fall aufprallen soll.

Es besteht allerdings das Problem, dass durch den sich beim Aufblasen entfaltenden Gassack erhebliche Verletzungen eines Fahrzeuginsassen hervorgerufen werden können, wenn sich dieser beim Aufblasen des Gassackes außerhalb seiner normalen Sitzposition befindet (sogenannter "oop-Fall"). Es sind daher bereits unterschiedliche Vorschläge unterbreitet worden, um Verletzungen von Fahrzeuginsassen durch den sich entfaltenden Gassack zu vermeiden. Gemäß einem Vorschlag sind Sensoren vorgesehen, die eine außergewöhnliche Sitzposition eines Insassen detektieren und dann gegebenenfalls das Auslösen eines Airbag-Modules und somit das Aufblasen und Entfalten des entsprechenden Gassackes verhindern. Ein anderer bekannter Lösungsansatz besteht darin, zum Aufblasen des Gassackes einen mehrstufigen Gasgenerator zu verwenden, wobei mit der ersten Stufe der Gassack zunächst nur auf einem vergleichsweise geringen Innendruck aufgeblasen wird, um das Verletzungsrisiko des Insassen zu vermindern.

Aus der DE 197 49 914 A1 ist eine Vorrichtung für einen Aufprallschutz an einem Lenkrad eines Kraftfahrzeuges bekannt, die einen Gassack mit einer zugeordneten Fülleinrichtung zum Aufblasen des Gassackes aufweist, wobei das gesamte Füllvolumen des Gassackes ringförmig ausgebildet ist und der Gassack an seiner dem Fahrer zugewandten Frontfläche eine kegelförmige bzw. trichterförmige Vertiefung aufweist. Hierdurch soll der Aufprall des Fahrzeuginsassen in einem oop-Fall gemildert werden.

In der DE 197 57 410 A1 ist ein Gassack für ein Airbackmodul beschrieben, der einen freigeschnittenen, unabhängig vom übrigen Gassackbereich beweglichen Gassackabschnitt aufweist, der innerhalb der Außenkontur des Gassackes liegt. Dieser Abschnitt kann die Bewegung des Insassen in einem Crash-Fall begleiten.

Der Erfindung liegt das Problem zugrunde, einen Gassack der eingangs genannten Art dahingehend zu verbessern, dass das Verletzungsrisiko eines Insassen beim Aufblasen des Gassackes in einem oop-Fall minimiert wird.

Dieses Problem wird erfindungsgemäß durch die Schaffung eines Gassackes mit den Merkmalen des Patentanspruchs 1 gelöst.

Danach ist vorgesehen, dass die äußere Hülle des Gassackes im aufgeblasenen Zustand einen Spalt ausbildet, der in die dem Insassen zugeordnete Hüllenfläche des Gassackes mündet, und dass der Insasse in einem oop-Fall beim Aufblasen des Gassackes (mit einem dem Gassack zugewandten Körperteil) in den sich bildenden Spalt eindringen kann und diesen dabei aufspreizt, so dass eine unmittelbare Kollision des Insassen mit der ihm zugewandten Hüllenfläche des Gassackes in einem oop-Fall verhindert wird.

Unter der dem Insassen zugeordneten bzw. zugewandten Hüllenfläche des Gassackes wird dabei derjenige Teil der Hülle des Gassackes verstanden, der dazu vorgesehen und bestimmt ist, in einem Crash-Fall mit dem auf den Gassack aufprallenden Insassen in Kontakt zu treten. Es handelt sich bei dieser Hüllenfläche also um denjenigen Teil der äußeren Gassackhülle, in den der Insasse in einem Crash-Fall eintauchen soll. Die dem Insassen zugewandte Hüllenfläche kann dabei insbesondere durch einen gekrümmten Abschnitt der äußeren Hülle des Gassackes gebildet werden.

Dadurch, dass erfindungsgemäß in diesen Teil der Hülle des Gassackes ein Spalt mündet, in den der Insasse in einem oop-Fall eindringen kann, soll verhindert werden, dass die dem Insassen zugeordnete Hüllenfläche des Gassackes beim Entfalten des Gassackes den Insassen verletzt. Stattdessen wird das der genannten Hüllenfläche zugewandte Körperteil des Insassen in den erfindungsgemäß vorgesehenen Spalt aufgenommen, wodurch ein unmittelbarer Zusammenprall mit der äußeren Gassackhülle vermieden wird.

Weiter ist vorgesehen, dass zwei Abschnitte des Gassackes, die den Spalt entlang einander gegenüberliegender Längsseiten begrenzen, derart gegeneinander verspannt sind, dass sie den Spalt nach dem Aufblasen des Gassackes verschließen, um einem Eindringen eines Körperteils des Insassen in den Spalt nach dem vollständigen Aufblasen des Gassackes entgegenzuwirken. Die beiden Abschnitte des Gassackes stehen demnach im aufgeblasenen Zustand derart unter Vorspannung, dass sie die Tendenz haben, sich entlang des Spaltes aneinander anzulegen. Hierdurch soll erreicht werden, dass der Gassack im vollständig aufgeblasenen Zustand mit seiner dem Insassen zugewandten Hüllenfläche möglichst denselben Schutz bietet, wie ein Gassack ohne Spalt.

Der Spalt erstreckt sich vorzugsweise von der dem Insassen zugewandten Hüllenfläche aus in Richtung auf eine andere, der Hüllenfläche abgewandte Seite des Gassackes.

Mit Vorteil entspricht die Ausdehnung des Spaltes entlang einer Richtung der Ausdehnung des Gassackes entlang dieser Richtung, wobei der Gassack durch den Spalt in zwei Abschnitte unterteilt wird.

Der Gassack ist dabei vorzugsweise derart gestaltet, dass er eine offene Kontur, insbesondere eine den Spalt U-förmig umgreifende Kontur aufweist. Hiermit wird erreicht, dass das Eindringen eines Körperteils des Insassen in den Spalt, verglichen mit einem Gassack mit einer vollständig geschlossenen Kontur, wie in der DE 197 49 914 A 1 beschrieben, erheblich erleichtert wird.

Nach einer Variante der Erfindung ist die Geometrie des Gewebezuschnittes bzw. der Gewebezuschnitte, aus denen die Hülle des Gassackes gebildet wird, derart gewählt, dass die beiden Abschnitte des Gassackes aufgrund der Geometrie der Hülle des Gassackes gegeneinander verspannt werden. So kann die Geometrie der Hülle des Gassackes derart gewählt sein, dass die beiden Abschnitte des Gassackes nach dem Aufblasen des Gassackes unter Vorspannung stehen und sich aneinander anlegen, wenn beim Aufblasen des Gassackes kein Körperteil des Insassen in den Spalt eingedrungen ist.

Hierbei werden die beiden Abschnitte des Gassackes mittels eines Gasgenerators derart mit Gas befüllt, dass sich beim Aufblasen und Entfalten des Gassackes die beiden Abschnitte zunächst entlang des Spaltes voneinander entfernen. Dadurch ist der Spalt anfangs breit genug, um (in einem oop-Fall) das Eindringen eines Körperteils des Insassen beim Aufblasen des Gassackes zu gestatten. Wenn der Gassack dann im Wesentlichen vollständig aufgeblasen ist, also nicht mehr die einströmenden Gase die Position der Abschnitte des Gassackes beeinflussen, dann wird die Position der beiden Abschnitte maßgeblich durch die Geometrie der Hülle des Gassackes bestimmt. Durch eine entsprechende Wahl der Geometrie der Hülle bzw. der Geometrie des Gewebezuschnittes, aus dem die Hülle besteht, kann dann sichergestellt werden, dass sich die beiden Abschnitte des Gassackes nach dem Aufblasen des Gassackes aneinander anlegen und dadurch den Spalt verschließen.

Nach einer anderen Variante der Erfindung sind zusätzliche Mittel vorgesehen, um die beiden Abschnitte des Gassackes gegeneinander zu verspannen, so dass sich die beiden Abschnitte des Gassackes nach dem Aufblasen des Gassackes aneinander anlegen können.

Die zum Verspannen der beiden Abschnitte des Gassackes vorgesehenen zusätzlichen Mittel können durch ein flächiges Element gebildet werden, das den Spalt zumindest teilweise überbrückt und die beiden Abschnitte des Gassackes entlang des Spaltes gegeneinander verspannt.

Gemäß einer anderen Ausführungsform werden die zum Verspannen der beiden Abschnitte des Gassackes vorgesehenen Mittel durch eine Umhüllung gebildet, die die beiden Abschnitte des Gassackes umgibt und gegeneinander verspannt und die aus einem separaten (nicht durch das Material des Gassackes gebildeten) Gewebezuschnitt besteht. Die Umhüllung ist vorzugsweise derart ausgebildet und am Gassack angeordnet, dass sie bei unbehinderter Entfaltung des Gassakkes (also in einem Fall, in dem der Insasse sich nicht in einer oop-Position befindet und damit nicht frühzeitig beim Aufblasen des Gassackes in den sich bildenden Spalt eindringt) den Spalt zumindest teilweise überdeckt.

Ferner ist die Umhüllung derart ausgebildet und angeordnet, dass sie durch das frühzeitige Vordringen eines Körperteils des Insassens in Richtung auf den Spalt beim Aufblasen des Gassackes (als Folge einer oop-Position) derart relativ zu dem Gassack verschoben werden kann, dass der Spalt zunehmend freigegeben wird, so dass der genannte Körperteil des Insassen in den Spalt eintauchen kann. Eine Relativbewegung der Umhüllung bezüglich des Gassackes bedeutet dabei, dass sich Umhüllung und Gassack relativ zu einander bewegen, unabhängig davon, welches der beiden Elemente bezüglich eines festen Koordinatensystems (z. B. der Karosserie eines Kraftfahrzeugs) tatsächlich bewegt wird. Insbesondere ist hiervon auch der Fall umfaßt, dass die Umhüllung durch ein in den Spalt vordringendes Körperteil des Insassen an ihrer Entfaltung gemeinsam mit dem Gassack gehindert wird.

Zur Fixierung der Position der Umhüllung bezüglich des Gassackes kann diese an mindestens einer Verbindungsstelle mit dem Gassack verbunden sein. Dabei kann insbesondere vorgesehen sein, dass die Umhüllung an einem Teil der Verbindungsstellen derart lösbar mit dem Gassack verbunden ist, dass durch das Eindringen eines Körperteiles eines Insassen in den Spalt beim Aufblasen des Gassackes diese Verbindungen gelöst werden, so dass die Umhüllung in der vorbeschriebenen Weise bezüglich des Gassackes verschoben werden kann, um den Spalt freizugeben.

Ferner weist die Umhüllung vorzugsweise mindestens eine Öffnung auf, durch die hindurch sich ein Abschnitt des Gassackes erstrecken kann. Hierdurch soll die vollständige Entfaltung des Gassackes beim Aufblasen sichergestellt werden.

Eine Insassen-Schutzeinrichtung für ein Kraftfahrzeug mit einem erfindungsgemäß ausgestatteten Gassack ist durch die Merkmale des Patentanspruchs 21 charakterisiert.

Weitere Merkmale und Vorteile der Erfindung werden bei der nachfolgenden Beschreibung eines Ausführungsbeispiels anhand der Figuren deutlich werden.

Es zeigen:
- Figur 1a -: einen ausgebreiteten leeren Gassack mit zwei durch einen Spalt voneinander getrennten Gassackabschnitten;
- Figur 1b -: den Gassack aus Figur 1a während des Aufblasens durch einströmendes Gas;
- Figur 2a -: eine Draufsicht auf eine zweite Ausführungsform eines Gassackes mit zwei Gassackabschnitten im aufgeblasenen Zustand, wobei der Spalt zwischen den beiden Gassackabschnitte durch ein flächiges Element überbrückt ist;
- Figur 2b -: eine Vorderansicht des Gassackes aus Figur 2a;
- Figuren 2c und 2d -: den Gassack aus den Figuren 2a und 2b während des Aufblasens, wobei ein Körperteil eines Insassen in den Spalt zwischen den beiden Gassackabschnitten eindringt;
- Figur 3a -: eine Variante des Gassackes aus Figur 2a, wobei sich das flächige Element nur entlang eines Teiles des Spaltes zwischen den beiden Gassackabschnitten erstreckt;
- Figur 3b -: den Gassack aus Figur 3a während des Aufblasens, wobei ein Körperteil eines Insassen in den Spalt zwischen den beiden Gassackabschnitten eindringt;
- Figur 4 -: eine Seitenansicht eines Insassen, der in einen Spalt zwischen zwei Gassackabschnitten eindringt;
- Figur 5a -: eine Abwandlung des Gassackes aus Figur 2a; bei der die beiden Gassackabschnitte von einer Umhüllung umfaßt und mittels dieser gegeneinander verspannt sind;
- Figur 5b -: den Gassack aus Figur 5a während des Aufblasens, wobei ein Körperteil eines Insassen in den Spalt zwischen den beiden Gassackabschnitten eindringt;
- Figur 6a -: eine Variante des Gassackes aus Figur 5a, wobei der Gassack innerhalb des Spaltes einen zusätzlichen Gassackabschnitt als Positionierhilfe für die Umhüllung aufweist;
- Figur 6b -: den Gassack aus Figur 6a während des Aufblasens, wobei ein Körperteil eines Insassen in den Spalt zwischen den beiden Gassackabschnitten eindringt;
- Figur 7a -: eine Variante des Gassackes aus Figur 5a, bei der die Umhüllung des Gassackes seitliche Öffnungen aufweist, durch die hindurch sich die beiden Gassackabschnitte in einem oop-Fall erstrecken können;
- Figur 7b -: eine Seitenansicht des Gassackes aus Figur 7a;
- Figur 7c -: den Gassack aus den Figuren 7a und 7b während des Aufblasens, wobei ein Körperteil eines Insassen in den Spalt zwischen den beiden Gassackabschnitten eindringt.

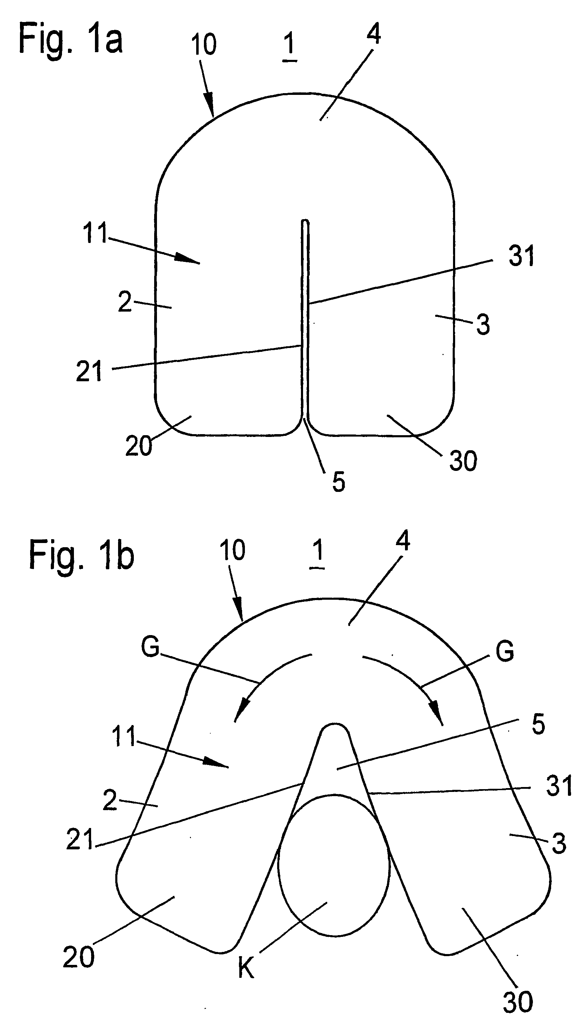

In Figur 1a ist ein flach ausgebreiteter, leerer Gassack dargestellt, der zwei über einen Verbindungsbereich 4 miteinander verbundene und durch einen Spalt 5 voneinander getrennte (als Schenkel ausgebildete) Gassackabschnitte 2, 3 umfasst und bei dem es sich beispielsweise um einen Beifahrerairbag handelt. In dem in Figur 1a dargestellten Zustand wird die Form des Gassackes im Wesentlichen durch die Geometrie des Gewebezuschnittes bestimmt, aus dem die Hülle 10 des Gassackes 1 besteht. Dieser Gewebezuschnitt ist vorliegend derart gewählt, dass die beiden Gassackabschnitte 2, 3 entlang des Spaltes 5, der sich von dem Verbindungsbereich 4 bis zu den freien Enden 20, 30 der Gassackabschnitte 2, 3 erstreckt, mit Seitenwänden 21, 31 aneinander anliegen oder nur geringfügig beabstandet sind. Geringfügiger Abstand bedeutet dabei, daß der Abstand in jedem Fall deutlich kleiner ist als die Abmessungen der Körperteile, die durch den Gassack in einem Crash-Fall geschützt werden sollen.

Figur 1b zeigt den in Figur 1a dargestellten Gassack 1 in einem Zustand, in dem dieser mit Gas befüllt wird. Hierzu wird ein geeigneter Gasgenerator (in Figur 1b nicht dargestellt) derart angeordnet, dass die in den Gassack 1 einströmenden Gase G die Tendenz haben, die beiden Abschnitte 2, 3 des Gassackes 1 voneinander wegzubewegen, so dass sich der durchgehende (von den Seitenwänden 21, 31 der Abschnitte 2, 3 begrenzte) Spalt 5 zwischen den beiden Abschnitten 2, 3 des Gassackes 1 aufspreizt. Mit anderen Worten ausgedrückt, strömen die Gase G aus dem Gasgenerator entlang einer solchen Richtung, in die beiden Abschnitte 2, 3 des Gassackes 1 ein, dass deren freie Enden 20, 30 in entgegengesetzter Richtung bewegt werden, wobei sie sich voneinander entfernen und die Abschnitte 2, 3 des Gassackes 1 nicht mehr aneinander anliegen. Hierdurch vergrößert sich der Spalt 5 zwischen den beiden schenkelartigen Abschnitten 2, 3 des Gassackes, in den in einem oop-Fall der Insasse eines Kraftfahrzeugs eindringen kann.

In Figur 1b ist schematisch der Kopf K eines Insassen zwischen den beiden Abschnitten 2, 3 des Gassackes 1 dargestellt. Eine solches Eindringen des Kopfes K eines Insassen zwischen die beiden Abschnitte 2, 3 des Gassackes 1 erfolgt zum Beispiel dann, wenn sich der Insasse zu dem Zeitpunkt, zu dem der Gassack aufgrund einer Fahrzeugverzögerung ausgelöst wird, außerhalb seiner normalen Sitzposition mit dem Kopf sehr dicht bei dem Gassack 1 befindet. In diesem Fall dringt der Fahrzeuginsasse mit seinem Kopf K (und gegebenenfalls auch mit weiteren Körperteilen, wie z.B. seiner Brust) in den Spalt 5 zwischen den beiden Abschnitten 2, 3 ein, der sich beim Aufblasen des Gassackes 1 bildet. Hierdurch wird der Spalt 5 noch erweitert, so dass der gesamte Kopf des Insassen aufgenommen werden kann. Dies vermeidet eine unmittelbare Kollision des Kopfes K des Insassen mit der ihm zugewandten Hüllenfläche 11 der Hülle 10 des Gassackes 1, so dass das Risiko einer Verletzung des Insassen durch den sich entfaltenden Gassack 1 in einem oop-Fall erheblich vermindert wird.

Befindet sich der Insasse demgegenüber beim Auslösen des Airbagmoduls und dem anschließenden Aufblasen des Gassakkes 1 in einer normalen Sitzposition, so kann sich der Gassack 1 ungestört, das heißt ohne Kontakt mit dem Insassen, entfalten. Auch hierbei wird zunächst durch die Richtung der in die Abschnitte 2, 3 des Gassackes 1 einströmenden Gase G ein Spalt 5 zwischen den beiden Abschnitten 2, 3 gebildet. Wenn jedoch das Aufblasen des Gassackes 1 abgeschlossen ist und dementsprechend keine weiteren Gase mehr in die Abschnitte 2, 3 des Gassackes 1 einströmen, dann haben die beiden Abschnitte 2, 3 aufgrund der in Figur 1a dargestellten Geometrie des Gassackzuschnittes, aus dem die Hülle 10 des Gassackes 1 besteht, die Tendenz, sich mit ihren Seitenwänden 21, 31 aufeinander zu zu bewegen, wodurch der Spalt 5 verschlossen oder zumindest erheblich verkleinert wird. Dies gewährleistet, dass die dem Insassen zugewandte Hüllenfläche 11 der Hülle 10 des Gassackes 1 in solchen Fällen, in denen sich der Insasse beim Aufblasen des Gassackes 1 in einer normalen Sitzposition befindet, den gleichen Schutz bietet wie ein konventioneller Gassack ohne Spalt. Dabei können z.B. zusätzliche Fangbänder vorgesehen sein, um die beiden Gassackabschnitte 2, 3 auch auf der dem Tuch oder Netz 6 abgewandten Seite des Spaltes 5 gegeneinander zu verspannen.

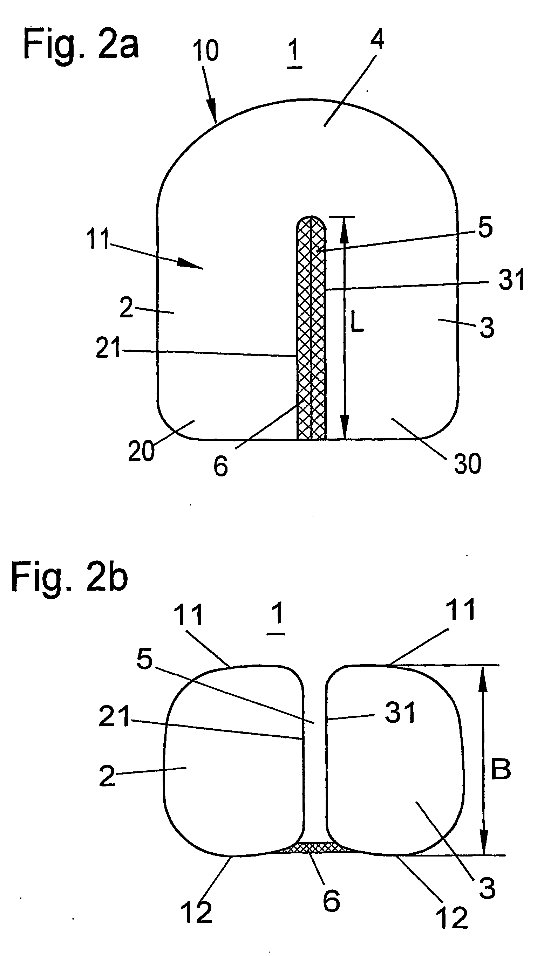

Figur 2a zeigt im aufgeblasenen Zustand eine Abwandlung des Gassackes aus Figur 1b. Auch in dem Ausführungsbeispiel gemäß Figur 2a besteht der Gassack 1 aus zwei über einen Verbindungsbereich 4 miteinander verbundenen Abschnitten 2, 3, wobei die Hülle 10 des Gassackes 1 eine dem Insassen zugewandte Hüllenfläche 11 aufweist. Zwischen den beiden Abschnitten 2, 3 des Gassackes 1 verläuft ein Spalt 5. Die beiden Längsseiten dieses Spaltes 5 werden durch Seitenwände 21, 31 der Abschnitte 2 bzw. 3 des Gassackes 1 begrenzt.

Wie anhand der Vorderansicht aus Figur 2b erkennbar ist, erstreckt sich der Spalt 5 entlang der gesamten Breite B des Gassackes 1 von der Hüllenfläche 11 bis zu der gegenüberliegenden Seite 12 der Gassackhülle 10. Auf dieser, der Hüllenfläche 11 abgewandten Seite 12 der Gassackhülle 10 sind die beiden Abschnitte 2, 3 mittels eines flächigen Elementes 6, z.B. eines Tuches, eines Netzes oder dergleichen, das den Spalt 5 überbrückt, miteinander verbunden. Hierdurch werden die beiden Abschnitte 2, 3 des Gassackes 1 gegeneinander verspannt, so dass sie die Tendenz haben, sich entlang des Spaltes 5 aneinander anzulegen und diesen zu verschließen. Hierdurch soll sichergestellt werden, dass die dem Insassen zugewandte Hüllenfläche 11, in die der Spalt 5 mündet, eine möglichst durchgehende Aufprallfläche für einen sich in Normalposition befindlichen Kraftfahrzeuginsassen bildet.

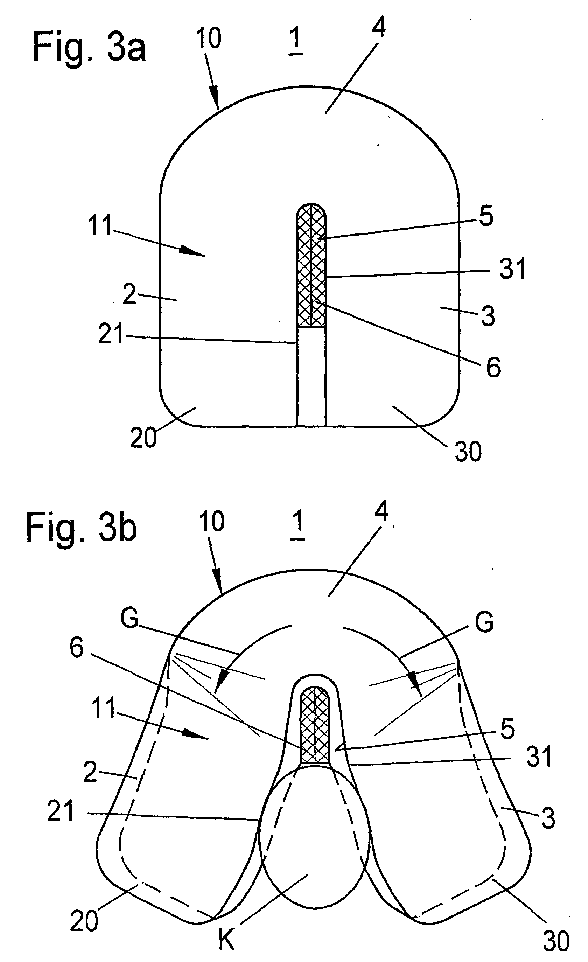

Das Tuch oder Netz 6 kann sich dabei entweder über die gesamte Länge L (Ausdehnung quer zur Breite B des Gassakkes 1) des Spaltes 5 erstrecken, vergl. Figur 2a, oder gemäß einer in Figur 3a dargestellten Variante nur über einen Teil der Länge L des Spaltes 5, so dass in einem vorderen Teil des Spaltes 5, in dem dieser in die Hülle 10 des Gassackes 1 mündet, ein besonders starkes Aufweiten des Spaltes 5 ermöglicht wird.

Quer zu seiner Haupterstreckungsrichtung, die von der dem Insassen zugewandten Hüllenfläche 11 zu der gegenüberliegenden Seite 12 der Gassackhülle 10 verläuft, ist der Spalt 5 auf einer Seite durch den Verbindungsbereich 4 der beiden Abschnitte 2, 3 begrenzt, während,er auf der gegenüberliegenden Seite in die Hülle 10 des Gassackes mündet.

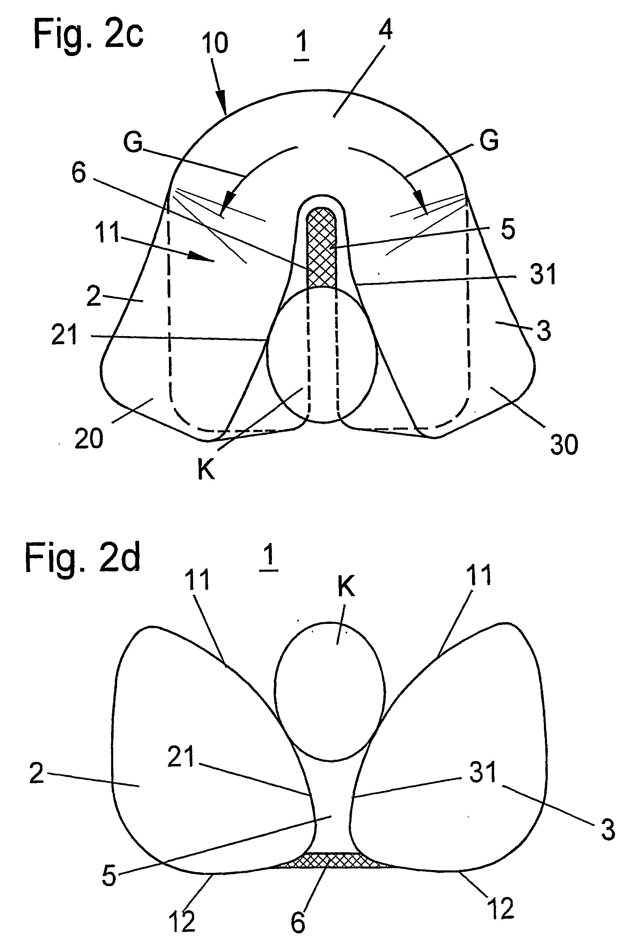

Die Figuren 2c und 2d zeigen den Gassack aus den Figuren 2a und 2b in einem Fall, in dem sich ein Fahrzeuginsasse zum Zeitpunkt einer erheblichen Fahrzeugverzögerung und damit zum Zeitpunkt des Auslösens des den Gassack 1 beinhaltenden Airbagmodules außerhalb seiner Normalposition, nämlich sehr dicht bei dem Airbagmodul, befindet. In diesem Fall dringt der Fahrzeuginsasse beim Aufblasen des Gassackes mit seinem der Hüllenfläche 11 zugewandten Körperteil, z.B. seinem Kopf K, in den Spalt 5 zwischen den beiden Abschnitten 2, 3 des Gassackes 1 ein, wodurch diese aufgeweitet werden. Hierdurch wird eine unmittelbare Kollision des Fahrzeuginsassen, insbesondere seines Kopfes K, mit der ihm zugewandten Hüllenfläche 11 beim Entfalten des Gassackes 1 vermieden und somit das Verletzungsrisiko des Insassen durch den sich entfaltenden Gassack erheblich verringert.

In Figur 3b ist das Eindringen des Kopfes K eines Fahrzeuginsassen in den Spalt zwischen den beiden Abschnitten 2, 3 des Gassackes 1 in dem Fall dargestellt, in dem sich das flächige Element 6 nur über einen Teil der Länge L des Spaltes 5 erstreckt, was die Aufweitung des Spaltes 5 durch den eindringenden Kopf K erleichtert.

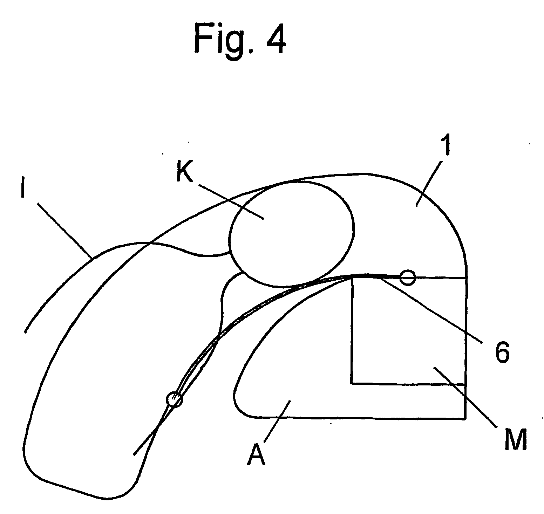

Figur 4 zeigt schematisch einen Insassen I eines Kraftfahrzeuges, insbesondere einen Beifahrer, der sich beim Aufblasen eines Gassackes 1 gemäß den Figuren 2a bis 2d sehr dicht bei dem Gassack 1 befindet. Hierdurch dringt der Insasse I mit seinem Kopf K und seinem Brustbereich in den Spalt 5 zwischen den beiden Abschnitten 2, 3 des Gassakkes 1 ein, der sich aus einem Airbagmodul M in der Armaturentafel A eines Kraftfahrzeugs heraus entfaltet.

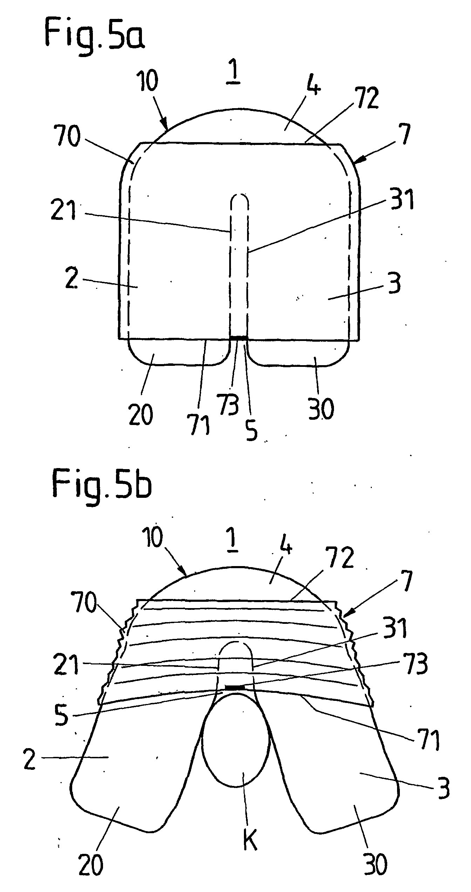

Figur 5a zeigt ein erfindungsgemäß gestalteten Gassack 1 im aufgeblasenen Zustand, dessen Hülle 10 identisch mit der Gassackhülle aus den vorhergehenden Ausführungsbeispielen gestaltet ist. Insbesondere weist die Gassackhülle 10 in der Draufsicht gemäß Figur 5a eine offene, im wesentlichen U-förmige Kontur auf. Hierdurch bildet der Gassack zwei durch den Spalt 5 voneinander getrennte Abschnitte 2, 3 mit freien Enden 20, 30 und einem Verbindungsbereich 4 zwischen den beiden Abschnitten 2, 3.

Um die beiden Gassackabschnitte gegeneinander zu verspannen, ist der Gassack 1 von einer zusätzlichen Umhüllung 7 umgeben, die die beiden Abschnitte 2, 3 des Gassackes 1 umschließt und im Bereich des Schlitzes 5 mit ihren den Schlitz begrenzenden Seitenwänden 21, 31 aneinander drückt. Die aus einem Materialzuschnitt 70 gebildete Umhüllung 7 ist an ihrem vorderen und hinteren Ende 71 bzw. 72 jeweils offen ausgebildet, so dass die beiden Gassackabschnitte 2, 3 mit ihren Enden 20, 30 sowie der Verbindungsbereich 4 jeweils aus der Umhüllung 7 herausragen.

Im Bereich des Schlitzes 5 weist die Umhüllung 7 ferner einen Zwickel 73 auf, so dass an der offenen Vorderseite 71 der Umhüllung zwei separate Öffnungen für die vorderen Enden 20, 30 der beiden Gassackabschnitte 2, 3 gebildet werden.

Zur definierten Positionierung der Umhüllung 7 bezüglich des Gassackes 1 kann diese beispielsweise im Bereich der vorderen Enden 20, 30 des Gassackes 1 sowie am Verbindungsbereich 4 des Gassackes (z.B. durch Kleben oder Vernähen) fixiert werden, wobei die Verbindungsstellen zwischen der Umhüllung 7 und den freien Enden 20, 30 der Gassackabschnitte 2, 3 lösbar ausgebildet sind.

Figur 5a zeigt eine Draufsicht auf den Gassack 1 mit Umhüllung 7, die sowohl den flach ausgebreiteten, leeren Gassack (d.h. in einem Zustand, bevor der Gassack zusammen mit der Umhüllung zu einem in einem Gehäuse verstaubaren Paket zusammengefaltet bzw. -gerafft wird) als auch den ungehindert aufgeblasenen (entfalteten) Gassack 1 repräsentiert.

Beim ungehinderten Aufblasen des Gassackes (d.h., es gibt beim Entfalten des Gassackes keine frühzeitige Kollision mit einem in oop-Position befindlichen, vorgebeugten Fahrzeuginsassen) werden die beiden Gassackabschnitte 2, 3 durch die Umhüllung 7 derart gegeneinander verspannt, dass der Schlitz 5 zwischen den beiden Gassackabschnitten 2, 3 weitgehend geschlossen ist. D.h., die beiden inneren Seitenwände 21, 31 der Gassackabschnitte 2, 3 werden durch die Wirkung der Umhüllung 7 gegeneinander gepreßt. Gleichzeitig überdeckt die Umhüllung 7 den Spalt 5.

Befindet sich demgegenüber beim Aufblasen des Gassackes 1 ein Insasse in einer oop-Position, so dass er mit einem Körperteil, z. B. seinem Kopf K, schon beim Entfalten des Gassackes 1 in dessen Spalt 5 vordringt, so werden hierdurch die Verbindungsstellen zwischen der Umhüllung 7 und den freien Enden 20, 30 der Gassackabschnitte 2, 3 gelöst. Dies ist eine Folge der beim Eintauchen des Kopfes K in den Spalt 5 des Gassackes 1 wirkenden Kräfte.

Ferner wird die Umhüllung 7 durch das Eintauchen des Kopfes K in den Spalt 5 beim Entfalten des Gassackes 1 bezüglich der Enden 20, 30 der Gassackabschnitte 2, 3 zunehmend nach hinten verschoben bzw. an einer Entfaltung gemeinsam mit dem Gassack 1 gehindert, so dass der Kopf K immer weiter in den Spalt 5 eintauchen kann. Gleichzeitig werden die beiden Glassackabschnitte 2, 3 nach außen abgedrängt. Durch dieses Eintauchen des Kopfes K eines Insassen in den Spalt 5 wird in einem oop-Fall die Verletzungsgefahr erheblich vermindert.

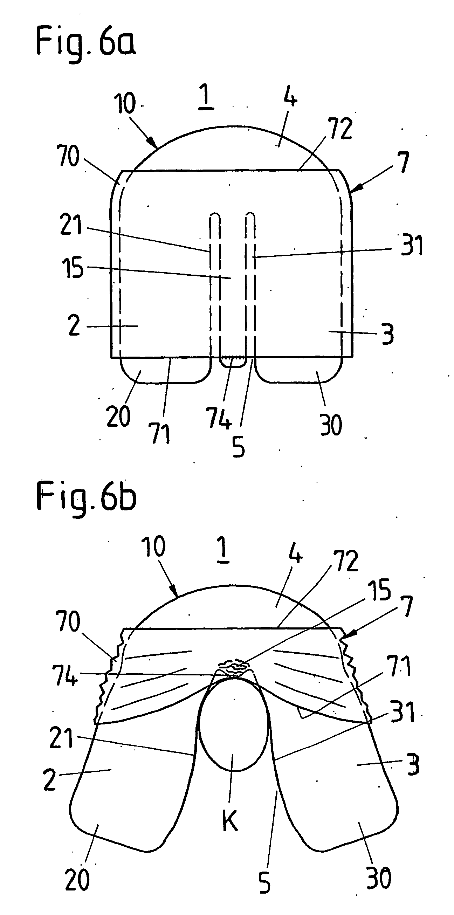

In Figur 6a ist eine Abwandlung des in Figur 5a dargestellten Gassackes gezeigt, bei dem sich im Bereich des Spaltes 5 ein zusätzlicher Gassackabschnitt (Positionierabschnitt 74) als Positionierhilfe für das vordere Ende 71 der Umhüllung 7 erstreckt.

Das vordere Ende 71 der Umhüllung 7 ist mit dem Positionierabschnitt 74 verbunden. Beim Aufblasen des Gassackes 1 wird hierdurch das vordere Ende 71 der Umhüllung 7 im Bereich der freien Enden 20, 30 der Gassackabschnitte 2, 3 positioniert. Zusätzlich ist die Umhüllung 7 vorzugsweise im Bereich ihres hinteren Endes 72 mit dem Verbindungsbereich 4 des Gassackes 1 verbunden.

Die Darstellung gemäß Figur 6a repräsentiert somit nicht nur den Gassack 1 mit Umhüllung 7 im leeren, flach ausgebreiteten Zustand, sondern zugleich auch den Zustand, nach dem der Gassack 1 ungehindert aufgeblasen wurde. Denn durch die Fixierung der Umhüllung 7 mit ihrem vorderen Ende 71 im Bereich der Enden 20, 30 der Gassackabschnitte 2, 3 am Positionierabschnitt 74 sowie im Bereich ihres hinteren Endes 72 am Verbindungsbereich 4 des Gassackes 1 behält die Umhüllung 7 beim Aufblasen des Gassackes 1 ihre mittels der genannten Verbindungsstellen fixierte Position, in der sie die beiden Abschnitte 2, 3 umgreift.

Im aufgeblasenen Zustand des Gassackes 1 werden die beiden Gassackabschnitte 2, 3 mittels der Umhüllung 7 gegeneinander verspannt und dadurch der Spalt 5 im wesentlichen verschlossen, so dass der Gassack dieselbe Schutzfunktion bietet, wie ein Gassack ohne Spalt.

Befindet sich demgegenüber beim Aufblasen des Gassackes 1 ein Insasse in einer oop-Position und ist nach vorn in Richtung auf den Gassack vorgebeugt, so kann er mit seinem Kopf K beim Entfalten des Gassackes 1 in dessen Schlitz 5 vordringen. Hierdurch blockiert er das Entfalten und Aufblasen des Positionierabschnittes 74 des Gassackes 1. Das Gas strömt daher ausschließlich in die beiden seitlichen Gassackabschnitte 2, 3.

Dadurch, dass der sich in den Spalte 5 erstreckende Positionierabschnitt 74 nicht aufgeblasen wird, kann die Umhüllung 7 beim Eintauchen des Kopfes K in den Spalt 5 zunehmend nach hinten in Richtung auf den Verbindungsbereich 4 verschoben bzw. an ihrem Entfalten zusammen mit dem Gassack 1 gehindert werden. Gleichzeitig werden die beiden Gassackabschnitte 2, 3 seitlich nach außen weggedrückt. Dies ermöglicht wiederum ein weiteres Eintauchen des Kopfes K in den Spalt 5 mit entsprechender Reduzierung der Verletzungsgefahr in einem oop-Fall.

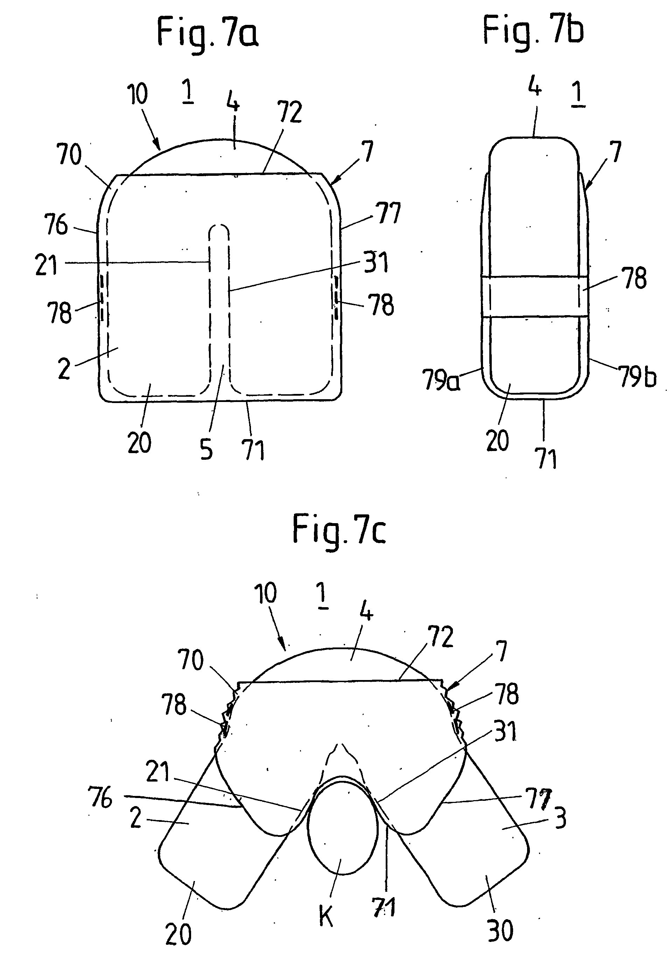

Die Figuren 7a und 7b zeigen eine weitere Abwandlung des Ausführungsbeispiels gemäß Figur 5a. Hierbei ist die Umhüllung 7 des Gassackes 1 an ihrem vorderen Ende 71 geschlossen, so dass die Gassackabschnitte 2, 3 mit ihren freien Enden 20, 30 das vordere Ende 71 der Umhüllung 7 nicht durchdringen können. Stattdessen weist die Umhüllung 7 gemäß den Figuren 7a und 7b in ihren Seitenwänden 76, 77 Öffnungen auf, durch die hindurch die Gassackabschnitte 2, 3 sich nach außen erstrecken können, vergleiche Figur 7c. Denn bei der Umhüllung 7 sind gemäß Figur 7b ein unterer und ein oberer Materialschnitt 79a bzw. 79b seitlich lediglich über eine vergleichsweise schmale Bahn 78 verbunden. Hierdurch werden in den Seitenwänden 76, 77 der Umhüllung 7 die genannten Öffnungen gebildet, durch die hindurch sich der Gassack 1 mit seinen Abschnitten 2, 3 erstrecken kann.

Wie bei den vorhergehenden Ausführungsbeispielen repräsentiert Figur 7a sowohl den leeren, flach ausgebreiteten Gassack als auch den ungehindert aufgeblasenen Gassack 1. Die entsprechende Seitenansicht gemäß Figur 7b zeigt den Gassack 1 demgegenüber lediglich in seinem vollständig aufgeblasenen Zustand, in dem er zwischen einem unteren Abschnitt 79a und einem oberen Abschnitt 79b der Umhüllung 7 aufgenommen ist.

Da die Umhüllung 7 (unter Berücksichtigung der seitlichen Verbindungsbahnen 78) den Gassack 1 bzw. insbesondere dessen Abschnitte 2, 3 ringförmig umfaßt, wird auch hier eine Verspannung der beiden Gassackabschnitte 2, 3 gegeneinander erreicht.

Befindet sich jedoch beim Aufblasen des Gassackes 1 ein Insasse in einem stark in Richtung auf den Gassack 1 nach vorne gebeugten Zustand, so dringt er beim Entfalten des Gassackes 1 in Richtung auf dessen Spalt 5 vor, wobei die beiden Gassackabschnitte 2, 3 nach außen abgedrängt werden. Sie können dann durch die Öffnungen in den Seitenwänden 76, 77 der Umhüllung 7 hindurch austreten. Hierdurch kann der Kopf K des Insassen zunehmend in den Spalt 5 vordringen, wobei die Umhüllung 7 in Richtung auf den Verbindungsbereich 4 des Gassackes 1 nach hinten verschoben bzw. am Entfalten gehindert wird. Dies ermöglicht wiederum ein tiefes Eintauchen des Kopfes K in den Spalt 5, so dass eine harte Kollision des Kopfes K eines Insassen mit dem Gassack 1 in einem oop-Fall verhindert wird.

Die erfindungsgemäß vorgesehene Gestaltung eines Gassackes eignet sich insbesondere für Fahrer- und Beifaher-Airbagmodule; sie kann aber auch bei Seitenairbags oder sonstigen Airbags eingesetzt werden.

## Patentansprüche

1. Gassack für eine Insassen-Schutzeinrichtung in Kraftfahrzeugen, der mittels eines Gasgenerators aufblasbar ist und dessen äußere Hülle im aufgeblasenen Zustand eine dem zu schützenden Insassen zugeordnete Hüllenfläche aufweist,
**dadurch gekennzeichnet,**
**dass** die Hülle (10) des Gassackes (1) im aufgeblasenen Zustand einen Spalt (5) ausbildet, der in die dem Insassen (I) zugeordnete Hüllenfläche (11) mündet, und dass der Insasse (I) in einem oop-Fall beim Aufblasen des Gassackes (1) mit einem dem Gassack (1) zugewandten Körperteil (K) in den sich bildenden Spalt (5) eindringen kann und diesen dabei aufspreizt, und dass zwei Abschnitte (2, 3) des Gassackes (1), die den Spalt (5) entlang einander gegenüberliegender Längsseiten (21, 31) begrenzen, derart gegeneinander verspannt sind, dass sie den Spalt (5) nach dem Aufblasen des Gassackes (1) verschließen, um das Eindringen eines Körperteiles (K) des Insassen (I) in den Spalt (5) nach dem vollständigen Aufblasen des Gassackes (1) zu verhindern.

2. Gassack nach Anspruch 1, **dadurch gekennzeichnet, dass** sich der Spalt (5) von der dem Insassen zugeordneten Hüllenfläche (11) aus in Richtung auf eine der Hüllenfläche abgewandte Seite (12) des Gassackes (1) erstreckt.

3. Gassack nach Anspruch 1 oder 2, **dadurch gekennzeichnet, dass** der Spalt (5) an einem Ende durch einen Verbindungsbereich (4) der beiden Abschnitte (2, 3) des Gassackes (1) begrenzt wird.

4. Gassack nach Anspruch 2 oder 3, **dadurch gekennzeichnet, dass** die Ausdehnung des Spaltes (5) entlang einer Richtung der Ausdehnung (B) des Gassackes (1) entlang dieser Richtung entspricht.

5. Gassack nach Anspruch 1 und 4, **dadurch gekennzeichnet, dass** der Gassack (1) durch den Spalt (5) in mindestens zwei Abschnitte (2, 3) unterteilt wird.

6. Gassack nach einem der vorhergehenden Ansprüche, **dadurch gekennzeichnet, dass** der Gassack (1) eine offene Kontur aufweist.

7. Gassack nach einem der vorhergehenden Ansprüche, **dadurch gekennzeichnet, dass** der Gassack (1) in einer Ansicht eine im wesentlichen U-förmige Kontur aufweist.

8. Gassack nach einem der Ansprüche 1 bis 5, **dadurch gekennzeichnet, dass** die beiden Abschnitte (2, 3) des Gassackes (1) aufgrund der Geometrie des Zuschnittes, aus dem die Hülle (10) des Gassackes (1) besteht, gegeneinander verspannt werden.

9. Gassack nach Anspruch 6, **dadurch gekennzeichnet, dass** der Zuschnitt, aus dem die Hülle (10) des Gassackes (1) besteht, derart gewählt ist, dass die beiden Abschnitte (2, 3) des Gassackes (1) nach dem Aufblasen des Gassackes (1) unter Vorspannung stehen und die Tendenz haben, sich aneinander anzulegen, wenn beim Aufblasen des Gassackes (1) kein Körperteil des Insassen in den Spalt (5) eingedrungen ist.

10. Gassack nach einem der Ansprüche 1 bis 9, **dadurch gekennzeichnet, dass** zusätzliche Mittel (6) vorgesehen sind, um die beiden Abschnitte (2, 3) des Gassackes (1) gegeneinander zu verspannen.

11. Gassack nach Anspruch 10, **dadurch gekennzeichnet, dass** die beiden Abschnitte (2, 3) des Gassackes (1) unter der Wirkung der zusätzlichen Mittel (6) die Tendenz haben, sich entlang des Spaltes (5) aneinander anzulegen, wenn beim Aufblasen des Gassackes (1) kein Körperteil des Insassen in den Spalt (5) eingedrungen ist.

12. Gassack nach Anspruch 10 oder 11, **dadurch gekennzeichnet, dass** die zusätzlichen Mittel ein flächiges Element (6) umfassen, das den Spalt (5) überbrückt und die beiden Abschnitte (2, 3) des Gassackes (1) entlang des Spaltes (5) gegeneinander verspannt.

13. Gassack nach Anspruch 12, **dadurch gekennzeichnet, dass** das flächige Element (6) nur einen Teilabschnitt des Spaltes (5) überbrückt.

14. Gassack nach Anspruch 10 oder 11, **dadurch gekennzeichnet, dass** die zusätzlichen Mittel eine Umhüllung (7) umfassen, die die beiden Abschnitte (2, 3) des Gassackes (1) umgibt.

15. Gassack nach Anspruch 14, **dadurch gekennzeichnet, dass** die Umhüllung (7) nach unbehinderter Entfaltung des Gassackes (1) den Spalt (5) zumindest teilweise überdeckt.

16. Gassack nach Anspruch 14 oder 15, **dadurch gekennzeichnet, dass** die Umhüllung (7) durch das Eindringen eines Körperteiles (K) des Insassen (I) in den Spalt (5) während des Aufblasens des Gassackes (1) derart relativ zu dem Gassack (1) verschiebbar ist, dass der Spalt (5) zunehmend freigegeben wird.

17. Gassack nach einem der Ansprüche 14 bis 16, **dadurch gekennzeichnet, dass** die Umhüllung (17) an mindestens einer Verbindungsstelle mit dem Gassack (1) verbunden ist.

18. Gassack nach Anspruch 17, **dadurch gekennzeichnet, dass** die Umhüllung (7) an zumindest einer Verbindungsstelle derart lösbar mit dem Gassack (1) verbunden ist, dass durch das Eindringen eines Körperteiles (K) des Insassen (I) in den Spalt (5) während des Aufblasens des Gassackes (1) die Verbindung lösbar ist.

19. Gassack nach einem der Ansprüche 14 bis 18, **dadurch gekennzeichnet, dass** die Umhüllung (7) mindestens eine Öffnung aufweist, durch die hindurch sich ein Abschnitt (2, 3) des Gassackes (1) erstrecken kann.

20. Gassack nach einem der Ansprüche 1 bis 19, **dadurch gekennzeichnet, dass** die beiden Abschnitte (2, 3) des Gassackes (1) durch die in den Gassack (1) einströmenden Gase (G) beim Aufblasen des Gassackes (1) entlang des Spaltes (5) voneinander wegbewegt werden.

21. Insassen-Schutzeinrichtung für ein Kraftfahrzeug mit einem Gassack und einem Gasgenerator zum Aufblasen des Gassackes, **gekennzeichnet durch** einen Gassack nach einem der vorhergehenden Ansprüche.

## Claims

1. A gas bag for an occupant protection device in motor vehicles, which can be inflated by means of a gas generator and the outer envelope of which, in the inflated state, has an envelope surface assigned to the occupant to be protected, **characterized in that** the envelope (10) of the gas bag (1), in the inflated state, forms a gap (5) which leads into the envelope surface (11) assigned to the occupant (I), and **in that** the occupant (I), in an OOP case, when the gas bag (1) is inflated, can penetrate with a body part (K) facing the gas bag (1) into the forming gap (5) and expands the latter in the process, and **in that** two sections (2, 3) of the gas bag (1) which define the gap (5) along longitudinal sides (21, 31) opposite one another are restrained relative to one another in such a way that they close the gap (5) after the inflation of the gas bag (1) in order to prevent the penetration of a body part (K) of the occupant (I) into the gap (5) after the complete inflation of the gas bag (1).

2. The gas bag as claimed in claim 1, **characterized in that** the gap (5) extends from the envelope surface (11) assigned to the occupant in the direction of a side (12) of the gas bag (1) remote from the envelope surface.

3. The gas bag as claimed in claim 1 or 2, **characterized in that** the gap (5) is defined at one end by a connecting region (4) of the two sections (2, 3) of the gas bag (1).

4. The gas bag as claimed in claim 2 or 3, **characterized in that** the extent of the gap (5) in one direction corresponds to the extent (B) of the gas bag (1) in this direction.

5. The gas bag as claimed in claims 1 and 4, **characterized in that** the gas bag (1) is subdivided into at least two sections (2, 3) by the gap (5).

6. The gas bag as claimed in one of the preceding claims, **characterized in that** the gas bag (1) has an open contour.

7. The gas bag as claimed in one of the preceding claims, **characterized in that** the gas bag (1), in an elevation, has an essentially U-shaped contour.

8. The gas bag as claimed in one of claims 1 to 5, **characterized in that** the two sections (2, 3) of the gas bag (1) are restrained relative to one another on account of the geometry of the cut pattern from which the envelope (10) of the gas bag (1) is made.

9. The gas bag as claimed in claim 6, **characterized in that** the cut pattern from which the envelope (10) of the gas bag (1) is made is selected in such a way that the two sections (2, 3) of the gas bag (1), after the inflation of the gas bag (1), are under prestress and have the tendency to abut against one another if no body part of the occupant has penetrated into the gap (5) when the gas bag (1) is inflated.

10. The gas bag as claimed in one of claims 1 to 9, **characterized in that** additional means (6) are provided in order to restrain the two sections (2, 3) of the gas bag (1) relative to one another.

11. The gas bag as claimed in claim 10, **characterized in that** the two sections (2, 3) of the gas bag (1), under the effect of the additional means (6), have the tendency to abut against one another along the gap (5) if no body part of the occupant has penetrated into the gap (5) when the gas bag (1) is inflated.

12. The gas bag as claimed in claim 10 or 11, **characterized in that** the additional means comprise a planar element (6) which bridges the gap (5) and restrains the two sections (2, 3) of the gas bag (1) relative to one another along the gap (5).

13. The gas bag as claimed in claim 12, **characterized in that** the planar element (6) bridges only a section of the gap (5).

14. The gas bag as claimed in claim 10 or 11, **characterized in that** the additional means comprise a sheathing (7) which surrounds the two sections (2, 3) of the gas bag (1).

15. The gas bag as claimed in claim 14, **characterized in that** the sheathing (7) at least partly covers the gap (5) after unfolding of the gas bag (1) without hindrance.

16. The gas bag as claimed in claim 14 or 15, **characterized in that** the sheathing (7), by the penetration of a body part (K) of the occupant (I) into the gap (5) during the inflation of the gas bag (1), can be displaced relative to the gas bag (1) in such a way that the gap (5) is opened to an increasing extent.

17. The gas bag as claimed in one of claims 14 to 16, **characterized in that** the sheathing (17) is connected to the gas bag (1) at at least one connecting point.

18. The gas bag as claimed in claim 17, **characterized in that** the sheathing (7) is connected to the gas bag (1) in a releasable manner at at least one connecting point in such a way that the connection can be released by the penetration of a body part (K) of the occupant (I) into the gap (5) during the inflation of the gas bag (1).

19. The gas bag as claimed in one of claims 14 to 18, **characterized in that** the sheathing (7) has at least one opening, through which section (2, 3) of the gas bag (1) can extend.

20. The gas bag as claimed in one of claims 1 to 19, **characterized in that** the two sections (2, 3) of the gas bag (1) are moved away from one another along the gap (5) by the gases (G) flowing into the gas bag (1) during the inflation of the gas bag (1).

21. An occupant protection device for a motor vehicle, having a gas bag and a gas generator for inflating the gas bag, **characterized by** a gas bag as claimed in one of the preceding claims.

## Revendications

1. Sac à gaz pour un dispositif de protection d'occupant dans des véhicules automobiles, qui peut être gonflé au moyen d'un générateur de gaz et dont l'enveloppe extérieure présente, à l'état gonflé, une surface enveloppe adaptée à l'occupant à protéger,
**caractérisé en ce que** l'enveloppe (10) du sac à gaz (1) forme à l'état gonflé une fente (5) qui débouche dans la surface enveloppe (11) adaptée à l'occupant, et **en ce que** l'occupant (I), dans le cas où celui-ci n'occupe pas sa position normale, peut pénétrer, lors du gonflage du sac à gaz (1), dans la fente (5) qui se forme, par une partie corporelle (K) tournée vers le sac à gaz (1) et provoque ainsi l'écartement de celle-ci, et **en ce que** deux tronçons (2, 3) du sac à gaz (1) qui délimitent la fente (5) le long de côtés longitudinaux mutuellement opposés (21, 31), sont précontraints l'un contre l'autre de telle manière qu'ils obturent la fente (5) après le gonflage du sac à gaz (1) pour empêcher la pénétration d'une partie corporelle (K) de l'occupant (I) dans la fente (5) après le gonflage complet du sac à gaz (1).

2. Sac à gaz selon la revendication 1, **caractérisé en ce que** la fente (5) s'étend, en partant de la surface enveloppe (11) adaptée à l'occupant, en direction d'un côté (12) du sac à gaz (1) opposé de la surface enveloppe.

3. Sac à gaz selon l'une ou l'autre des revendications 1 et 2, **caractérisé en ce que** la fente (5) est limitée à une extrémité par une zone de liaison (4) des deux tronçons (2, 3) du sac à gaz (1).

4. Sac à gaz selon l'une ou l'autre des revendications 2 est 3, **caractérisé en ce que** l'extension de la fente (5) le long d'une direction correspond à l'extension (B) du sac à gaz (1) le long de cette direction.

5. Sac à gaz selon les revendications 1 est 4, **caractérisé en ce que** le sac à gaz (1) est subdivisé par la fente (5) en au moins deux tronçons (2, 3).

6. Sac à gaz selon l'une des revendications précédentes, **caractérisé en ce que** le sac à gaz (1) présente un contour ouvert.

7. Sac à gaz selon l'une des revendications précédentes, **caractérisé en ce que** le sac à gaz (1) présente, dans une vue, un contour essentiellement en forme de U.

8. Sac à gaz selon l'une des revendications 1 à 5, **caractérisé en ce que** les deux tronçons (2, 3) du sac à gaz (1) sont précontraints l'un contre l'autre en raison de la géométrie du flan à partir duquel est réalisée l'enveloppe (10) du sac à gaz (1).

9. Sac à gaz selon la revendication 6, **caractérisé en ce que** le flan à partir duquel est réalisée l'enveloppe (10) du sac à gaz (1) est choisi de telle façon que les deux tronçons (2, 3) du sac à gaz (1) sont sous précontrainte après le gonflage du sac à gaz (1) et ont tendance à s'appliquer l'un contre l'autre lorsque, lors du gonflage du sac à gaz (1), aucune partie corporelle de l'occupant n'a pénétré dans la fente (5).

10. Sac à gaz selon l'une des revendications 1 à 9, **caractérisé en ce qu'**il est prévu des moyens supplémentaires (6) pour précontraindre les deux tronçons (2, 3) du sac à gaz (1) l'un contre l'autre.

11. Sac à gaz selon la revendication 10, **caractérisé en ce que** les deux tronçons (2, 3) du sac à gaz (1) ont tendance, sous l'action des moyens supplémentaires (6), à s'appliquer l'un contre l'autre le long de la fente (5) lorsque, lors du gonflage du sac à gaz (1), aucune partie corporelle de l'occupant n'a pénétré dans la fente (5).

12. Sac à gaz selon l'une ou l'autre des revendications 10 et 11, **caractérisé en ce que** les moyens supplémentaires comprennent un élément surfacique (6) qui coiffe la fente (5) et qui précontraint les deux tronçons (2, 3) du sac à gaz (1) l'un contre l'autre le long de la fente (5).

13. Sac à gaz selon la revendication 12, **caractérisé en ce que** l'élément surfacique (6) ne coiffe qu'un tronçon partiel de la fente (5).

14. Sac à gaz selon l'une ou l'autre des revendications 10 et 11, **caractérisé en ce que** les moyens supplémentaires comprennent une enveloppe (7) qui entoure les deux tronçons (2, 3) du sac à gaz (1).

15. Sac à gaz selon la revendication 14, **caractérisé en ce que** l'enveloppe (7) recouvre au moins partiellement la fente (5) après déploiement sans entrave du sac à gaz (1).

16. Sac à gaz selon l'une ou l'autre des revendications 14 et 15, **caractérisé en ce que**, du fait de la pénétration d'une partie corporelle (K) de l'occupant (I) dans la fente (5) pendant le gonflage du sac à gaz (1), l'enveloppe (7) est déplaçable par rapport au sac à gaz (1) de telle façon que la fente (5) est progressivement libérée.

17. Sac à gaz selon l'une des revendications 14 à 16, **caractérisé en ce que** l'enveloppe (7) est reliée au sac à gaz (1) à au moins un emplacement de liaison.

18. Sac à gaz selon la revendication 17, **caractérisé en ce que** l'enveloppe (7) est reliée au sac à gaz (1) de manière détachable en au moins un emplacement de liaison, de telle façon que la liaison peut être détachée par la pénétration d'une partie corporelle (K) de l'occupant (I) dans la fente (5) pendant le gonflage du sac à gaz (1).

19. Sac à gaz selon l'une des revendications 14 à 18, **caractérisé en ce que** l'enveloppe (7) comporte au moins une ouverture à travers laquelle un tronçon (2, 3) du sac à gaz (1) peut s'étendre.

20. Sac à gaz selon l'une des revendications 1 à 19, **caractérisé en ce que** les deux tronçons (2, 3) du sac à gaz (1) sont déplacés en éloignement l'un de l'autre le long de la fente (5) par le gaz (G) qui afflue dans le sac à gaz (1) lors du gonflage du sac à gaz (1).

21. Dispositif de protection d'occupant pour un véhicule automobile, comprenant un sac à gaz et un générateur de gaz pour gonfler le sac à gaz, **caractérisé par** un sac à gaz selon l'une des revendications précédentes.
